# EUROPEAN PATENT APPLICATION

(11) **EP 2 463 770 A2**
(43) Date of publication of application: **13.06.2012**
(21) Application number: 11192160.7
(22) Date of filing: 06.12.2011
(51) Int. Cl.: G06F 3/12, G03G 15/00

(54) **Printing control apparatus, printing apparatus, and carrier medium**

(30) Priority: 10.12.2010 JP 2010275823
(71) Applicant: Ricoh Company, Ltd., Tokyo 143-8555 (JP)
(72) Inventor: Kubota, Hajime, Tokyo, 143-8555 (JP); Tamura, Noboru, Tokyo, 143-8555 (JP); Matsui, Hideaki, Tokyo, 143-8555 (JP); Shibata, Yuto, Tokyo, 143-8555 (JP); Okada, Daisuke, Tokyo, 143-8555 (JP); Momose, Takeo, Tokyo, 143-8555 (JP); Hayashi, Masahiro, Tokyo, 143-8555 (JP)
(74) Representative: Schwabe - Sandmair - Marx

(57) **Abstract**

A printing control apparatus (1, 21) includes a print commanding unit (2, 21) that sends a notice of printing data and printing start command to a printing unit (22) on sheets supplied from a normal tray or a bypass tray. The print commanding unit (2, 21) includes a condition determining unit (14, 15) that determines whether a sheet supplying condition set with respect to the printing data and a status of the printing unit (22) satisfy a condition for the bypass tray; a checkup screen display unit (4) that displays a checkup screen relating to the sheet supply from the bypass tray in a case where it is determined that the condition is satisfied; and a notice permitting unit (14, 15) that permits a notice of a printing start command in a case where a notice indicating agreement for printing is received.

## Description

### CROSS-REFERENCE TO RELATED APPLICATIONS

The present application claims priority to and incorporates by reference the entire contents of Japanese Patent Application No. 2010-275823 filed in Japan on December 10, 2010.

### BACKGROUND OF THE INVENTION

### 1. Field of the Invention

The present invention relates to a printing control apparatus for performing printing control, a printing apparatus (an image forming apparatus such as a digital multifunction peripheral, a digital copier, a facsimile machine, and a printer) having the printing control apparatus, and carrier medium for embodying necessary functions (functions according to the invention) on a computer which controls the printing control apparatus.

### 2. Description of the Related Art

As an example of the printing apparatus described above, there is a printing apparatus including a bypass tray (through which an operator feed a sheet into with hand-feeding) for feeding a sheet having a special size or a special type of a sheet which is temporarily used unlike a main body tray (a normal) for feeding a sheet of which the size or the paper quality is determined in advance as a feeding tray (hereinafter, simply referred to as a "tray"), so that printing may be performed by using the sheet fed from the bypass tray.

Such a printing apparatus is configured to have a function for performing the feeding from the bypass tray according to the size and the sheet type designated by the printing data so that the size and the type of to-be-printed sheet with respect to the bypass tray may not be set.

Therefore, at the time of performing the printing, in the case where a sheet different from the to-be-printed sheet is set on the bypass tray such as the case where the sheet used for the previous printing jobs is forgotten, there is a problem in that a wrong sheet may be fed.

As one of the solutions to the problem, there is a solution which displays a checkup screen before a sheet is fed from the bypass tray so as to prompt a user to check and confirm the sheet to be fed.

For example, Japanese Patent Application Laid-open No. 2000-229460 discloses a configuration of a printing apparatus, where a setting is made in advance to determine whether to display the checkup screen before the feeding from the bypass tray, and in a case where the setting indicates that the checkup screen should be displayed, the checkup screen is displayed before the feeding from the bypass tray.

However, in the configuration disclosed in Japanese Patent Application Laid-open No. 2000-229460, in a case where printing control is performed by a host (a client) connected to an external controller or a printing apparatus, in an environment where a system (hereinafter, referred to as a "printing system") for performing printing, feeding, discharging is fixed, the printing system sequentially performs the printing with respect to the pages that are subjects the printing jobs. In the case of a system which does not stop ongoing printing until all pages are completely printed or until the system become caught a non-printable state, for example, even if the second page is fed from the bypass tray, the printing continues. Therefore, there is a problem in that the checkup screen may not be displayed before feeding from the bypass tray, and thus erroneous feeding from the bypass tray is likely to occur.

The invention is made in view of the above circumstances and thus the invention aims to prevent an erroneous sheet supplying (feeding) from a bypass tray of a printing apparatus.

There are needs for such a printing control apparatus, a printing apparatus which includes the printing control apparatus, and computer program product with which computer executes controlling the printing control apparatus.

### SUMMARY OF THE INVENTION

It is an object of the present invention to at least partially solve the problems in the conventional technology.

A printing control apparatus includes: a print commanding unit that sends a notice of printing data and printing start command to a printing unit which performs printing in accordance with printing data by page by page on sheets which are supplied one by one from a normal tray or a bypass tray. The print commanding unit includes a condition determining unit that determines whether or not a sheet supplying condition set with respect to the printing data and a status of the printing unit satisfy a condition for supplying the sheet from the bypass tray before supplying the sheet used for printing the printing data, a checkup screen display unit that displays a checkup screen relating to the sheet supply from the bypass tray in a case where it is determined by the condition determining unit that the condition for supplying the sheet from the bypass tray is satisfied, and a notice permitting unit that permits a notice of a printing start command to the printing unit in a case where a notice indicating agreement for printing is received with respect to the display of the checkup screen by the checkup screen display unit.

A printing apparatus includes: the printing control apparatus mentioned above; and a printing unit that prints the printing data page by page on the sheet supplied sheet by sheet from the normal tray or the bypass tray according to the printing data and a notice of a printing start command from the print commanding unit.

A carrier medium includes a program recorded therein for causing a computer to implement functions of the units included in the printing control apparatus mentioned above on a computer.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

Fig. 1 is a block diagram illustrating an exemplary hardware configuration of a laser printer which is a printing apparatus equipped with a printing control apparatus according to an embodiment;
Fig. 2 is a flowchart illustrating an example of an overall process in a case where the laser printer illustrated in Fig. 1 functions as a printing system for continuously performing the printing process with respect to the printing data of a plurality of pages within the printing jobs;
Fig. 3 is a flowchart illustrating an example of a temporary tray setting changing process of a print commanding system and a process of the printing system of the laser printer illustrated in Fig. 1;
Fig. 4 is a diagram for describing overall processes of the print commanding system and the printing system of the laser printer illustrated in Fig. 1;
Fig. 5 is flowchart illustrating a first example of a process of the print commanding system illustrated in Fig. 4;
Fig. 6 is a diagram illustrating an example of a checkup screen displayed on an operation panel illustrated in Fig. 1 before the feeding from a bypass tray;
Fig. 7 is a flowchart illustrating an example of an overall process including a process of the laser printer illustrated in Fig. 1 according to the first example and a manipulation procedure performed by a user;
Figs. 8A and 8B are diagrams for describing processes of the laser printer illustrated in Fig. 1 according to a second example including setting change of a sheet attribute set with respect to the bypass tray in comparison with those of the first example;
Fig. 9 is a flowchart illustrating a second example of the process of the print commanding system illustrated in Fig. 4 according to the invention; and
Fig. 10 is a flowchart illustrating an example of an overall process including a process of the laser printer illustrated in Fig. 1 according to the second example and a manipulation procedure performed by a user.

### DETAILED DESCRIPTION OF THE PREFERRED EMBODIMENTS

Hereinafter, embodiments will be described in detail with reference to the drawings.

### Hardware Configuration of Laser Printer

First, hardware configuration of a laser printer which is a printing apparatus including a printing control apparatus according to an embodiment will be described.

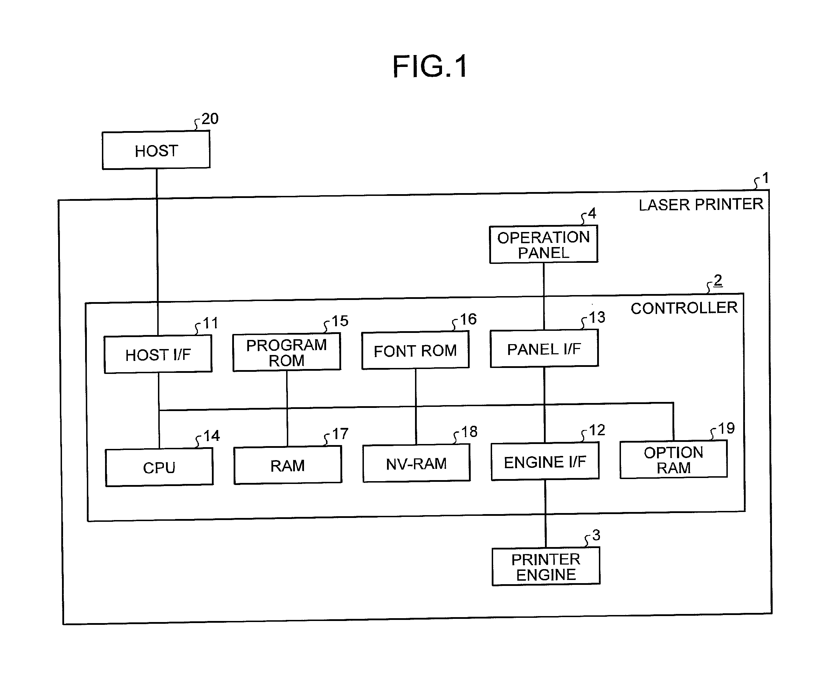

Fig. 1 is a block diagram illustrating an example of a hardware configuration of a laser printer.

A laser printer 1 includes a controller 2, a printer engine 3, and an operation panel 4.

The controller 2 corresponds to the printing control apparatus and is a collective term for a control mechanism which converts printing data obtained from a host apparatus 20 into video data (image data) and outputs the video data (image data) to the printer engine 3 according to a control mode set at this time and a control code output from the host 20. The controller 2 is configured in the form of a module described hereinafter.

In other words, the controller 2 includes a host interface (hereinafter, "interface" being abbreviated to "I/F") 11, an engine I/F 12, a panel I/F 13, a central processing unit (hereinafter, abbreviated to "CPU") 14, a program ROM 15, a font ROM 16, a RAM 17, an NV-RAM 18, and an option RAM 19.

The host I/F 11 is a communication unit for receiving various types of commands (control signals) and data transmitted from the host 20 or transmitting a status signal indicating a status of the laser printer 1 to the host 20.

The engine I/F 12 is a communication unit for transmitting commands and video signals to the printer engine 3 or receiving the status signal from the printer engine 3.

The panel I/F 13 is a communication unit for performing transmission of display control data (data for allowing various types of information such as the status of the laser printer 1 to be displayed) and reception of manipulation signals (signals for performing conversion of mode, font, or the like) between the operation panel 4 and the panel I/F 13.

The CPU 14 is a central process unit and performs overall control of the controller 2, for example, performs processing printing data (printing data and control data) from the host 20 according to the program stored in the program ROM 15.

The program ROM 15 is a read only memory (storage unit) for storing programs for allowing the CPU 14 to process and manage data in the controller 2 or to control peripheral modules, and the font ROM 16 is a read only memory (storage unit) for storing various fonts used for printing.

The RAM 17 is a read-write memory used for a work memory which is used when the CPU 14 executes the data process; a buffer which temporarily stores the printing data from the host 20 in units of pages; a bitmap memory which converts the printing data in the printing data temporarily stored in the buffer into an actual printing pattern and stores the printing pattern as video data (video signals), or the like.

The NV-RAM 18 is a non-volatile memory which holds internal data although power is shut down. The NV-RAM 18 stores content of mode indication from the operation panel 4, content of various settings including setting (tray setting) of the sheet attributes with respect to the feeding tray described later, and the like.

The option RAM 19 is a memory which stores data other than the data stored in the RAM 17 and the NV-RAM 18.

The printer engine 3 includes a laser write unit which optically scans a photosensitive element, which is an internal image carrier, by a laser beam modulated according to the video signal, an image forming unit which is constructed with the photosensitive element and processing devices around the photosensitive element, a mechanism which includes a sheet conveying unit including various rollers such as a pair of registration rollers and the like, and an engine driver which is a controller for controlling thereof.

In the printer engine 3, the engine driver performs the printing process page-by-page by controlling sequence operations of the image forming unit and the sheet conveying unit and the video signal to the laser write unit based on the command and the video signal from the controller 2. In other words, an electrostatic latent image is formed on the photosensitive element based on the command and the video signal. A toner image (visible image) is formed by developing the latent image by toner; and sheets (other sheets may be used) are fed (supplied) sheet-by-sheet from a main body tray or a bypass tray. The toner image is transferred to the sheet to be thermally fixed thereon. In addition, hereinafter, "the printing process is performed" may also be referred to as "the printing process is performed on printing data".

The operation panel 4 includes a display unit for displaying various types of information such as the status of the laser printer 1 and a manipulation unit for changing the operation mode, the font, or the like of the laser printer 1.

The host 20 is an information processing apparatus such as an office computer, a personal computer, and a word processor which has functions as a printing data generation unit. The host 20 produces printing data such as document data and transmits the printing data and the like to the laser printer 1 so as to perform the printing process on the produced printing data.

If the printing data of the printing jobs is transmitted from the host 20, the CPU 14 receives the printing data through the host I/F 11 and, after that, divides the printing data into the printing data, the printing control data, and others, converts the printing data and the printing control data into an intermediate code including a printing position, a printing size, bitmap information, and the like, and stores the intermediate code in the buffer of the RAM 17.

In this manner, if the process of the print command from the host 20 is performed or if the processed data exceed the data corresponding to one page, a process for converting the intermediate code stored in the buffer of the RAM 17 into the video data is performed, and when the process is finished, the print start command is issued to the printer engine 3 through the engine I/F 12. In synchronization with the command, the video data are transmitted as the video signal.

Through a series of the flow described above, the printing process of the printing data from the host 20 is performed by the printer engine 3.

### Process of Printing System

Next, an overview of the processes (processes of the printing system) in the case where the laser printer 1 illustrated in Fig. 1 functions as a printing system which continuously prints the printing data of a plurality of pages within the printing jobs will be described.

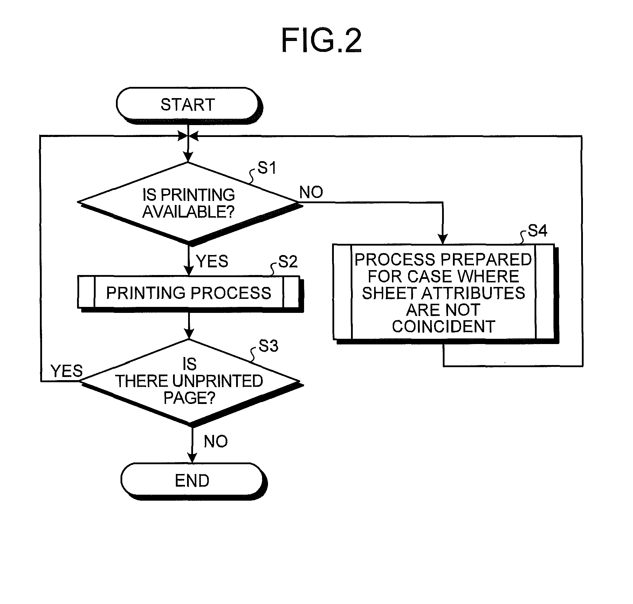

Fig. 2 is a flowchart illustrating an example of an overview of the process of the printing system.

As illustrated in Fig. 2, the printing system performs the printing process of the printing data (actually, video data) of a plurality of pages sequentially from the first page with respect to the printing jobs of which the print starting is commanded (S1 to S3). At the time of the printing process, the sheets are fed sheet-by-sheet from the main body tray or the bypass tray to be used for the printing process of each page.

Herein, in the case where there is a page of which the normal printing is not available, the printing system determines that the printing is not available in Step S1, and the process proceeds to Step S4.

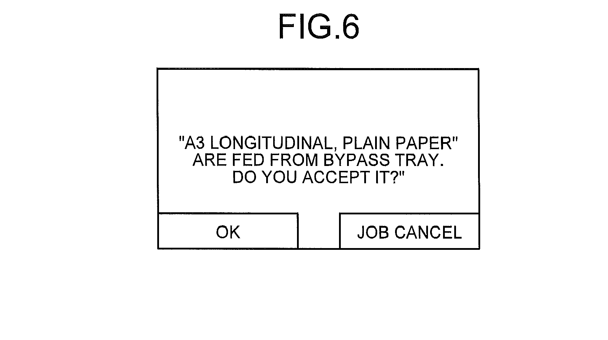

In Step S4, a process at the time of the non-coincidence of sheet attributes is performed. In other words, a notice of error is issued to the print commanding system which is not the print commanding system, and the control is transferred thereto. Therefore, the print commanding system performs the process (for example, the display of the checkup screen illustrated in Fig. 6) with respect to the page (page of which the normal printing is not available), and the printing system performs the printing process sequentially from the page (the page of which the normal printing is not available) according to the command of the print commanding system. Alternatively, the printing system performs the printing process sequentially from the subsequent page (S1 to S3). In the case where the printing process is performed from the following page (the page of which the normal printing is available) of the current page, the print commanding system side performs the process of eliminating the printing data of the current page.

In the case of the embodiment, since the laser printer 1 itself functions as the printing system and the print commanding system, if the laser printer 1 receives the printing jobs including the printing data of plural pages, the laser printer 1 sequentially performs the printing process of the printing data of the page of which normal printing is available. In the case where there is a page for which the normal printing is not available, the laser printer 1 displays the non-coincidence of sheet attributes as an error on the operation panel 4 (actually, a display unit) so as to prompt a user to solve the problem. After the treatment by the user, the laser printer 1 continues to perform the printing process so that the printing process is performed sequentially from the current page or the subsequent page.

### Temporary Tray Setting Changing Process

Next, a temporary tray setting change of the print commanding system of the laser printer 1 illustrated in Fig. 1 will be described.

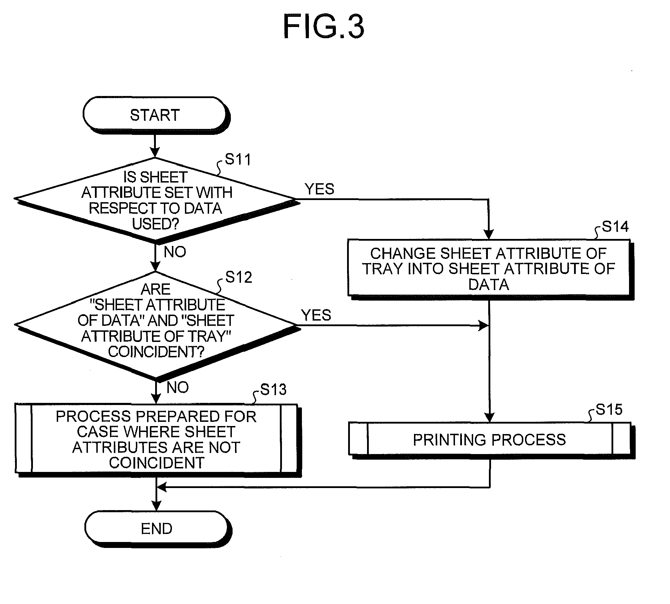

Fig. 3 is a flowchart illustrating an example of a temporary tray setting changing process of the print commanding system and a process of the printing system.

In general, in the case where feeding from the main body tray (normal feeding tray) is performed, if the sheet attribute (sheet attribute of the tray) such as size or sheet type set with respect to the main body tray is coincident with the sheet attribute (the sheet attribute of data) set (added) with respect to the printing data of the to-be-printed page, the printing system determines that the feeding is available (the printing is available) and performs the feeding (corresponding to the processes of S12 and S15 in Fig. 3).

However, with respect to an bypass tray used for temporary printing of a nonstandard-sized sheet or a special sheet, it is necessary to change the setting of the sheet attribute for every printing, so that it is inconvenient for the user.

Therefore, in the embodiment, the above problem is solved without changing the setting of the sheet attribute every time through user's manipulation (actually, manipulation performed on an operation panel 4). In Steps S11 and S14 in Fig. 3, in the case where the setting, indicating that the sheet attribute set with respect to the printing data of the printing page is used, is performed, the print commanding system temporarily sets the sheet attribute set with respect to the printing data of the printing page as the attribute of the feeding tray (that is, changes the sheet attribute set with respect to the tray into the sheet attribute set with respect to the printing data of the to-be-printed page), so that feeding may be performed without setting the sheet attributes of the feeding tray every time.

In addition, in a case where there is no setting to use sheet attributes which are set with respect to the printing data of the to-be-printed page, and in a case where the sheet attribute is not coincident with the sheet attribute (sheet attribute of the tray) such as size or sheet type set with respect to the tray, since the page cannot be normally printed, the printing system determines that the printing is not available, and the process proceeds to Step S13, where the printing system and the print commanding system perform together the same process (process prepared for a case in which sheet attributes are not coincident) as in Step S4 in Fig. 2.

### Overview of Processes of printing system and print commanding system

Next, an overview of the processes of the printing system and the print commanding system of the laser printer 1 illustrated in Fig. 1 will be described.

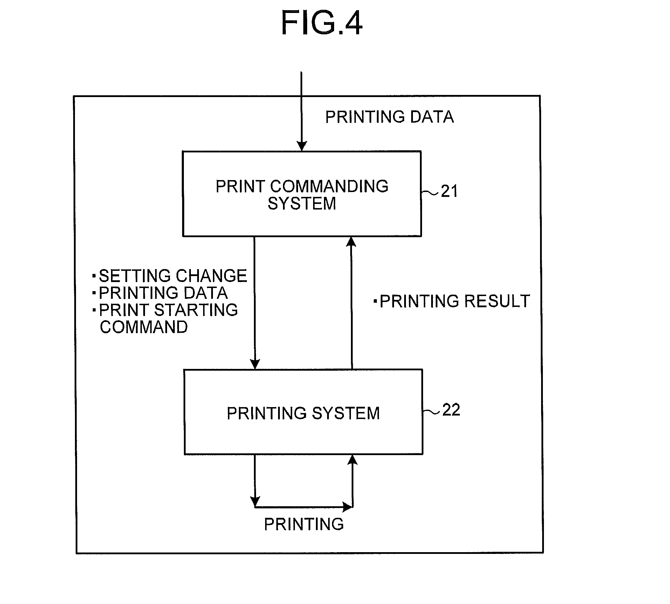

Fig. 4 is a view for describing the overview of the processes.

The controller 2 of the laser printer 1 performs the function of a print commanding system 21 corresponding to a print commanding unit (including the functions of a condition determining unit, a checkup screen display unit, a notice permitting unit, first and second setting change units, a sheet attribute storage unit, and a sheet supplying determining unit according to the invention) by allowing the CPU 14 to execute the program stored in the program ROM 15. In addition, a combination of the controller 2 and the printer engine 3 may function as the printing system which is a printing unit (including the function of the printing stopping unit).

If the print commanding system 21 receives the printing data of the printing jobs (including the setting of the sheet attribute of the printing data) produced by the host 20, the print commanding system 21 changes various settings including the setting (tray setting) for the sheet attribute of the tray if necessary or transmits the received printing data of each page in the printing jobs and a notice to instruct the printing start to a printing system 22.

The printing system 22 starts the process illustrated in Fig. 2 according to the printing start command from the print commanding system 21 and performs the printing process of the printing data of each page in the printing jobs received from the print commanding system 21 sequentially from the first page. Next, the printing result (success/stop) is notified to the print commanding system 21.

In addition, the host 20 may have the function of the controller 2 as the print commanding system 21.

### Processes According to First Example

Next, the processes of the laser printer 1 according to a first example illustrated in Fig. 4 will be described.

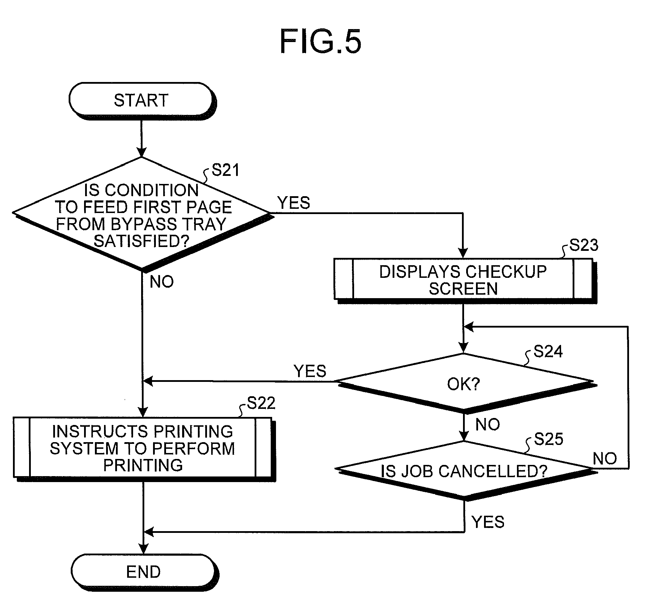

Fig. 5 is a flowchart illustrating a first example of the processes of the print commanding system 21 illustrated in Fig. 4.

When the print commanding system 21 issues a notice to command the printing start or the like to the printing system 22, the print commanding system 21 starts a process routine illustrated in Fig. 5. First, the process proceeds to Step S21, and it is determined whether or not the feeding mode (sheet supplying mode), which is the feeding condition set with respect to the received printing data of the printing jobs or the sheet attribute (sheet attribute) and the current status of the laser printer 1, satisfies the bypass tray feeding condition set in advance, that is, the condition for feeding the sheet used for printing the first page from the bypass tray.

Herein, an example of the relation between the feeding condition (feeding mode or sheet attribute) set with respect to the printing data of the printing jobs, which is the condition for feeding the sheet used for printing the first page from the bypass tray, and the current status of the laser printer 1 (status of the main body) is listed in Table 1. The data indicating the relation are stored in the NV-RAM 18 in advance.

**Table 1**

| Feeding mode | | Status of main body |
|---|---|---|
| 1 | Bypass tray designation | Sheet is present on bypass tray |
| 2 | Automatic tray selection | Sheet is present on bypass trays |
| 3 | | ● Sheet is present on bypass tray |
| | | ● Non-coincidence of sheet attributes except for bypass tray |

In the example of Table 1, in a case where the feeding mode set with respect to the received printing data (page data) of the first page in the printing jobs is a "bypass tray designation" mode for designating the bypass tray and the sheet is set on the bypass tray, the print commanding system 21 determines that the feeding mode and the current status of the laser printer 1 satisfy the condition for feeing the sheet used for printing the first page from the bypass tray (herein, a preferential feeding tray for feeding the sheet used for printing the first page is defined as the bypass tray).

In addition, in a case where the feeding mode set with respect to the received printing data of the first page in the printing jobs is an "automatic tray selection" mode for automatically selecting the main body tray or the bypass tray and the sheet is set on the bypass tray, the print commanding system 21 also determines that the feeding mode and the current status of the laser printer 1 satisfy the condition for feeding the sheet used for printing the first page from the bypass tray.

In addition, in a case where the sheet is set on the bypass tray and the sheet attribute set with respect to the received printing data of the first page in the printing jobs is coincident with only the sheet attribute set with respect to the bypass tray of the printing system 22 (in a case where the above sheet attribute is not coincident with the sheet attribute set with respect to the main body tray which is the feeding tray other than the bypass tray), the print commanding system 21 determines that the sheet attribute and the current status of the laser printer 1 satisfy the condition for feeding the sheet used for printing the first page from the bypass tray.

Next, in a case where it is determined that the feeding condition set with respect to the received printing data of the first page in the printing jobs and the current status of the laser printer 1 do not satisfy the condition for feeding the sheet used for printing the first page from the bypass tray, the process directly proceeds to Step S22, the received printing data of the printing jobs and a notice of the printing start command are transmitted to the printing system 22.

In a case where it is determined that the feeding condition set with respect to the received printing data of the first page in the printing jobs and the current status of the laser printer 1 satisfy the condition for feeding the sheet used for printing the first page from the bypass tray, the process proceeds to Step S23, and for example, as illustrated in Fig. 6, the checkup screen is displayed on the operation panel 4 before feeding from the bypass tray.

The checkup screen illustrated in Fig. 6 is a checkup screen relating to the feeding from the bypass tray. The message "A3, longitudinal, plain papers are fed from bypass tray. Do you accept it?", and buttons "OK" and "Job Cancel" are displayed thereon.

With respect to the display of the checkup screen displayed before feeding from the bypass tray, in Steps S24 and S25, the selection between "OK" and "Job Cancel" according to the manipulation of the user is waited for. In the case where "OK" is selected, since the notice indicating that the content of the checkup screen is OK (agreement) is received, the notice of the printing start command is permitted, the process proceeds to Step S22, and the received printing data of each page in the printing jobs and the notice of the printing start command are transmitted to the printing system 22. In a case where "Job Cancel" is selected, since the notice indicating that the printing jobs is to be cancelled is received, the notice of the printing start command is prohibited, and the process in Fig. 5 ends.

The processes including the processes of the laser printer 1 according to the first example and the manipulation procedure performed by the user described hereinbefore are summarized as follows.

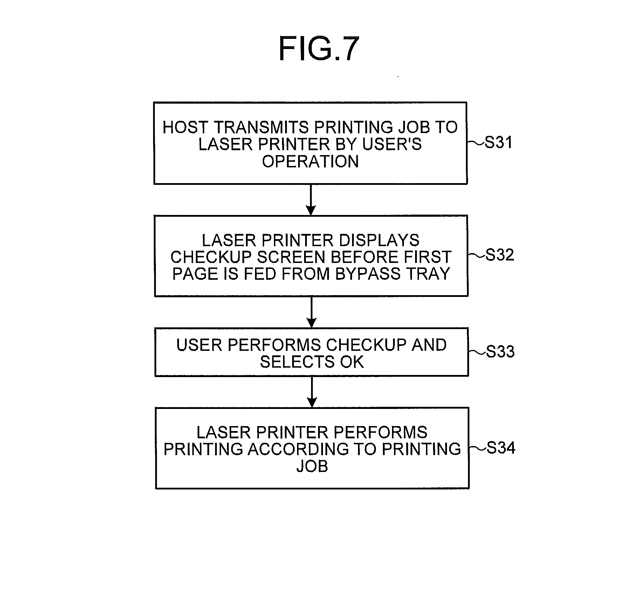

Fig. 7 is a flowchart illustrating an example of an overview of the processes of the laser printer 1 according to the first example and the manipulation procedure performed by the user.

First, in Step S31, the user allows the printing data of the printing jobs to be transmitted from the host 20 to the laser printer 1 by the manipulation on the host 20.

In the next Step S32, the laser printer 1 receives the printing data of the printing jobs from the host 20 and displays the checkup screen relating to the feeding from the bypass tray on the operation panel 4 before the sheet used for the printing of the first page is fed from the bypass tray as described above.

In the next Step S33, the user checks the content of the checkup screen and selects "OK".

In the final Step S34, the laser printer 1 checks that the content of the checkup screen is OK and performs the printing process of the received printing data of the printing jobs.

In this manner, before the feeding of the sheet used for printing the printing data, the print commanding system of the laser printer determines whether or not the feeding condition set with respect to the printing data and the status of the laser printer satisfy the condition for feeding the sheet from the bypass tray. In a case where the condition for feeding the sheet from the bypass tray is satisfied, the checkup screen relating to the feeding from the bypass tray is displayed to draw the user's attention, so that the bypass tray may be temporarily disabled. Therefore, it is possible to prevent erroneous feeding from the bypass tray. Processes According to Second example of the Invention

Next, the processes of the laser printer 1 according to a second example of the invention illustrated in Fig. 1 will be described.

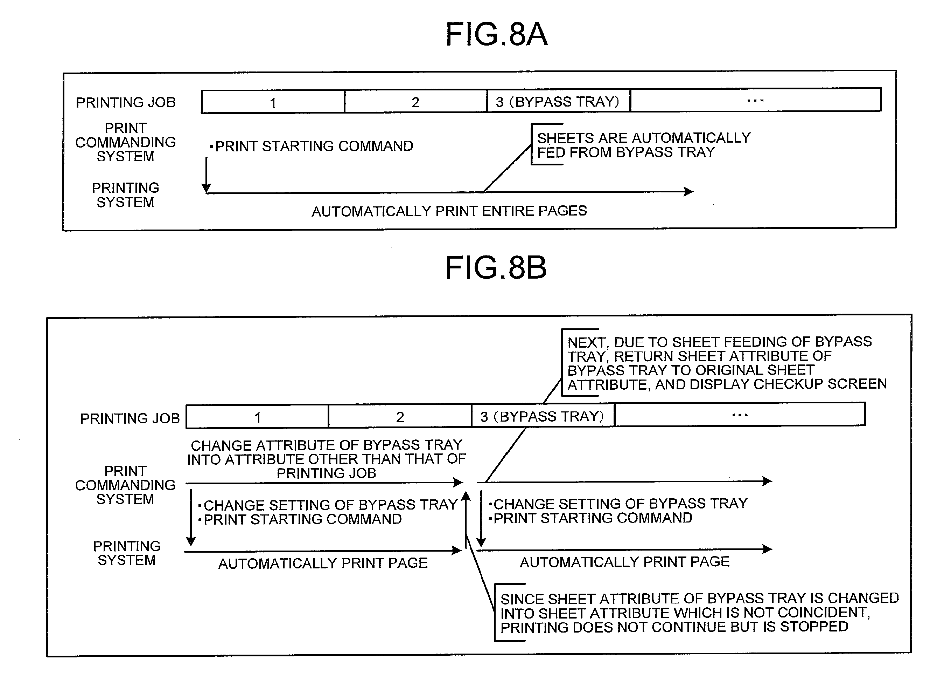

Figs. 8A and 8B are diagrams for describing the processes according to the second example including changing the setting regarding the sheet attribute set with respect to the bypass tray in comparison with those of the first example described above.

In the first example, in a case where only the feeding mode set with respect to the printing data of the second page and the following pages, for example, the printing data of the third page in the printing jobs as illustrated in Fig. 8A is the "bypass tray designation" mode, the printing system 22 allows the sheet used for printing the printing data of the pages other than the third page to be automatically fed from the main body tray and allows the sheet used for printing the printing data of the third page to be automatically fed from the bypass tray, the printing process of the printing data of each page is continuously performed. However, the checkup screen may not be displayed before feeding of the sheet used for printing the printing data of the third page.

Therefore, in the second example, for example, as illustrated in Fig. 8B, the print commanding system 21 switches the setting from the sheet attribute set with respect to the bypass tray where the sheet used for printing the printing data of the third page in the printing jobs is set to a sheet attribute (for example, a size) different from the sheet attribute set with respect to the printing data, and transmits the notice of the printing start command and the printing data of each page together to the printing system 22.

As a result, the printing system 22 may not perform the feeding from the bypass tray due to the non-coincidence of sheet attributes even at the timing of when to feed the sheet used for printing the printing data of the third page in the printing jobs from the bypass tray. Therefore, the printing system 22 may not perform the printing (printing continuation) on the sheet set on the bypass tray, but stops the printing and transmits a notice indicating that the printing is stopped due to the non-coincidence of sheet attributes to the print commanding system 21.

If the print commanding system 21 receives the notice, the print commanding system 21 returns the sheet attribute set with respect to the bypass tray of the printing system 22 to the original sheet attribute. In other words, the setting is changed into the same sheet attribute as the sheet attribute set with respect to the printing data of the third page in the printing jobs.

Subsequently, in a case where the checkup screen is displayed on the operation panel 4 before feeding from the bypass tray and it is checked that the content of the checkup screen is OK, a notice of the printing continuation command (printing start command of the printing data of the third page) is transmitted to the printing system 22, so that the printing process may be continuously performed on the third page and the following pages.

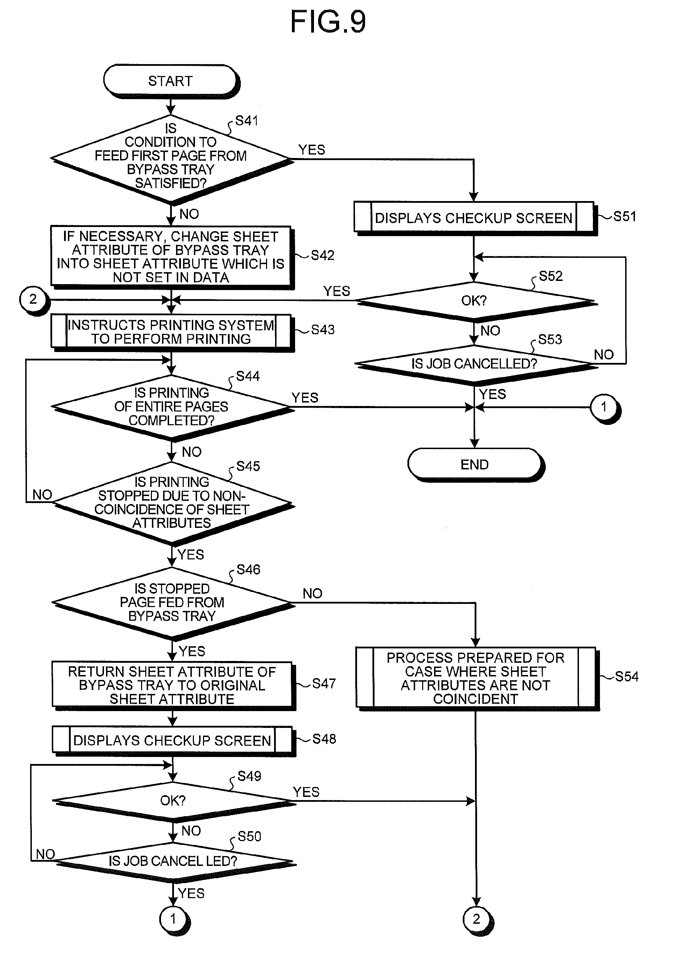

Fig. 9 is a flowchart illustrating a second example of the process of the print commanding system 21 according to the invention illustrated in Fig. 4.

When the print commanding system 21 is to issue a notice of the printing start command or the like to the printing system 22, the print commanding system 21 starts a process routine illustrated in Fig. 9. First, the process proceeds to Step S41, and similarly to Step S21 in Fig. 5, it is determined whether or not the feeding mode which is the feeding condition set with respect to the received printing data of the first page in the printing jobs or the sheet attribute and the current status of the laser printer 1 satisfy the condition set in advance for feeding the sheet used for printing the first page from the bypass tray.

Next, in the case where it is determined that the feeding condition set with respect to the received printing data of the first page in the printing jobs and the current status of the laser printer 1 satisfy the condition for feeding the sheet used for the printing of the first page from the bypass tray, the process proceeds to Step S51, so that the same processes as those of Steps S23 to S25 of Fig. 5 are performed in Steps S51 to S53.

In the case where it is determined that the feeding condition set with respect to the received printing data of the first page in the printing jobs and the current status of the laser printer 1 do not satisfy the condition for feeding the sheet used for the printing of the first page from the bypass tray, the process directly proceeds to Step S42.

In Step S42, if necessary (in the case where the bypass tray is used), the setting is changed from the sheet attribute set with respect to the bypass tray of the printing system 22 to a sheet attribute different from the sheet attribute set with respect to the printing data of the second page and the following pages which are printed on the sheet fed from the bypass tray. For example, the setting is changed from the sheet attribute set with respect to the bypass tray where the sheet used for the printing of the printing data of the third page in the printing jobs is set thereon to a sheet attribute different from the sheet attribute set with respect to the printing data. At this time, in addition to the after-setting-change sheet attribute, the before-setting-change sheet attribute is also stored in the NV-RAM 18.

In the next Step S43, the received printing data of each page in the printing jobs and a notice of the printing start command are transmitted to the printing system 22, so that the printing process is allowed to be started.

If the printing system 22 receives the printing data of each page in the printing jobs and the notice of the printing start command from the print commanding system 21, the printing system 22 performs the printing of the printing data of each page page-by-page on the sheets which are fed from the normal tray or the bypass tray sheet-by-sheet. Next, if the printing is completed, a notice of the completion of the printing is issued to the print commanding system 21. In addition, in the case where the sheet attribute set with respect to the bypass tray is not coincident with the sheet attribute which is the feeding condition set with respect to the printing data of the page to be printed on the sheet fed from the bypass tray before the feeding from the bypass tray, the feeding from the bypass tray may not be performed, so that the printing (printing continuation) is not performed on the sheet set on the bypass tray. Therefore, the printing of the printing data of the page is stopped, and a notice indicating that the printing is stopped due to the non-coincidence of sheet attributes is issued to the print commanding system 21.

In the print commanding system 21, after the process of Step S43 is performed, the process proceeds to Step S44, and it is determined whether or not the printing process of the received printing data of the entire pages is completed. However, in the case where the notice of the completion of the printing is received from the printing system 22, it is determined that the printing process of the printing data of the entire pages is completed, and the process in Fig. 9 is ended.

In the case where the printing process of the printing data of the entire pages is not completed, it is determined in Step S45 whether or not the printing of the printing system is stopped due to the non-coincidence of sheet attributes. However, in the case where the notice of the stopping of the printing due to the non-coincidence of sheet attributes is received from the printing system 22, it is determined that the printing of the printing system is stopped due to the non-coincidence of sheet attributes, and the process proceeds to Step S46.

In Step S46, it is determined based on the before-setting-change sheet attribute stored in the NV-RAM 18 whether or not the sheet used for the printing of the printing data of the page of which the printing is stopped is fed from the bypass tray.

If it is determined that the sheet used for the printing of the printing data of the page of which the printing is stopped is not fed from the bypass tray, the process proceeds to Step S54, and the same process (the process of the time of non-coincidence of sheet attributes) as that of Step S4 in Fig. 2 is performed.

In addition, if it is determined that the sheet used for the printing of the printing data of the page of which the printing is stopped is fed from the bypass tray, the process proceeds to Step S47, so that the sheet attribute set with respect to the bypass tray is changed into the before-setting-change sheet attribute stored in the NV-RAM 18 (that is, returned to the original sheet attribute). Thereafter, the process proceeds to Step S48, and the processes of Steps S23 to S25 in Fig. 5 are performed in Steps S48 to S50.

The processes including the processes of the laser printer 1 according to the second example and the manipulation procedure performed by the user described hereinbefore are summarized as follows.

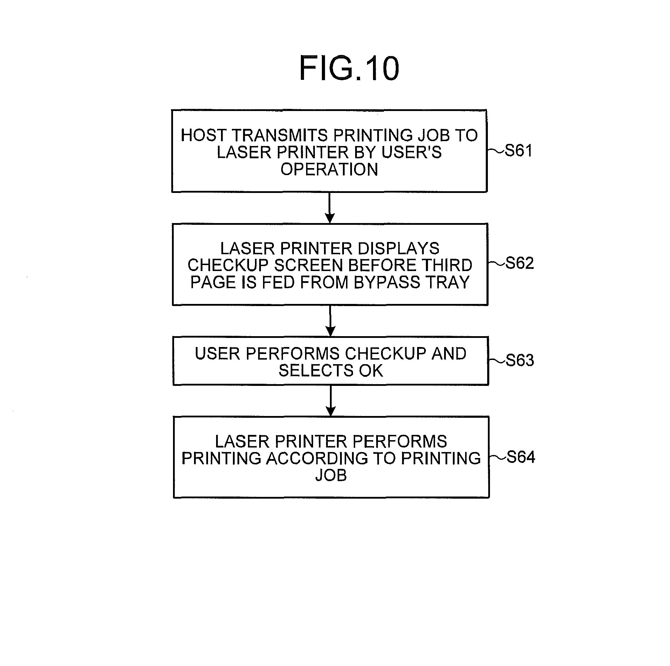

Fig. 10 is a flowchart illustrating an example of an overview of the processes of the laser printer 1 according to the second example and the manipulation procedure performed by the user.

First, in Step S61, the user allows the printing data of the printing jobs to be transmitted from the host 20 to the laser printer 1 by the manipulation on the host 20.

In the next Step S62, the laser printer 1 receives the printing data of the printing jobs from the host 20 and displays the checkup screen relating to the feeding from the bypass tray on the operation panel 4 before the sheet used for printing the third page is fed from the bypass tray as described above.

In the next Step S63, the user checks the content of the checkup screen and selects "OK".

In the final Step S64, the laser printer 1 checks that the content of the checkup screen is OK and performs the printing process of the received printing data of the printing jobs.

According to the second example, it is possible to obtain the following effects besides the same effects as that of the first example.

In the case where the sheet attribute set with respect to the bypass tray is not coincident with the sheet attribute which is the feeding condition set with respect to the printing data of the page to be printed on the sheet fed from the bypass tray, the printing system of the laser printer stops the printing of the printing data of the page before feeding from the bypass tray.

On the other hand, in the case where it is determined that the feeding condition set with respect to the printing data of the first page and the status of the laser printer do not satisfy the condition for feeding the sheet from the bypass tray, before the print commanding system issues a notice of the printing start command to the printing system, the print commanding system performs the setting change from the sheet attribute set with respect to the bypass tray to a sheet attribute different from the sheet attribute set with respect to the printing data of the second page and the following pages which are printed on the sheet fed from the bypass tray and stores the before-setting-change sheet attribute.

Next, in the case where the printing is stopped, it is determined based on the stored sheet attribute whether or not the sheet used for the printing of the printing data of the page of which the printing is stopped is fed from the bypass tray. In the case where the sheet is fed from the bypass tray, the print commanding system returns the sheet attribute set with respect to the bypass tray to the stored before-setting-change sheet attribute and, after that, displays the checkup screen relating to the sheet supplying of the bypass tray. In the case where a notice indicating that the content of the checkup screen is OK is received, since the print commanding system receives the notice indicating that the content of the checkup screen is OK, the print commanding system permits notification of the printing continuation command (printing start command) and issues a notice of the printing continuation command to the printing system.

Therefore, erroneous feeding from the bypass tray on which the sheet used for printing the printing data of the second page and the following pages is set is also prevented.

Hereinbefore, although the embodiment applied to the laser printer including the printing control apparatus has been described, the invention is not limited thereto. The invention may also be applied to other image forming apparatuses such as a digital copier or a facsimile, which includes the printing control apparatus, and information processing apparatuses such as a personal computer, which includes the printing control apparatus.

### Program According to the Embodiment

A program may be a program for causing a computer (CPU) which controls a printing control apparatus to implement functions of a condition determining unit, a checkup screen display unit, a notice permitting unit, a first setting change unit, a second setting change unit, a sheet attribute storage unit, and a sheet supplying determining unit according to the invention. The program is allowed to be executed by the computer, so that the aforementioned effects may be obtained.

The program may be stored in a storage unit such as a ROM, a non-volatile memory (a flash ROM, an EEPROM, or the like), or a hard disc drive (HDD) which is originally installed in the printing control apparatus. In addition, the program may be provided as stored in a recording medium such as a CD-ROM, or a non-volatile recording medium (memory) such as a memory card, a flexible disk, an MO, a CD-R, a CD-RW, a DVD+R, a DVD+RW, a DVD-R, a DVD-RW, or a DVD-RAM. The program stored in the recording medium is executed in a way that it is installed in the printing control apparatus and is then executed by the CPU, or in a way that the CPU reads directly the program from the recording medium and then executes the program, so that the procedures described above may be performed.

In addition, by connecting to a network, the program may also be downloaded from an external device with a recording medium where the program is recorded or an external device with a storage unit where the program is stored.

According to the invention, a printing control apparatus (or a computer which controls the printing control apparatus) determines whether or not a sheet supplying condition set with respect to the printing data and a status of a printing unit satisfy a condition for supplying the sheet from a bypass tray before supplying a sheet used for printing the printing data, and in a case where the condition for supplying the sheet from the bypass tray is satisfied, a checkup screen relating to the sheet supply from the bypass tray is displayed, so that erroneous sheet supply from the bypass tray of the printing apparatus is prevented.

The present invention can be implemented in any convenient form, for example using dedicated hardware, or a mixture of dedicated hardware and software. The present invention may be implemented as computer software implemented by one or more network processing apparatus. The network can comprise any conventional terrestrial or wireless communications network, such as the Internet. The processing apparatus can compromise any suitably programmed apparatuses such as a general purpose computer, personal digital assistant, mobile telephone (such as a WAP or 3G-compliant phone) and so on. Since the present invention can be implemented as software, each and every aspect of the present invention thus encompasses computer software implemental on a programmable device. The computer software can be provided to the programmable device using any conventional carrier medium. The carrier medium can compromise a transient carrier medium such as an electrical, optical, microwave, acoustic or radio frequency signal carrying the computer code. An example of such a transient medium is a TCP/IP signal carrying computer code over an IP network, such as the Internet. The carrier medium can also comprise a storage medium for storing processor readable code such as a floppy disk, hard disk, CD ROM, magnetic tape device or solid state memory device.

The hardware platform includes any desired kind of hardware resources including, for example, a central processing unit (CPU), a random access memory (RAM), and a hard disk drive (HDD). The CPU may be implemented by any desired kind of any desired number of processor. The RAM may be implemented by any desired kind of volatile or non-volatile memory. The HDD may be implemented by any desired kind of non-volatile memory capable of storing a large amount of data. The hardware resources may additionally include an input device, an output device, or a network device, depending on the type of the apparatus. Alternatively, the HDD may be provided outside of the apparatus as long as the HDD is accessible. In this example, the CPU, such as a cache memory of the CPU, and the RAM may function as a physical memory or a primary memory of the apparatus, while the HDD may function as a secondary memory of the apparatus.

Although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

## Claims

1. A printing control apparatus (1, 21) that performs printing control, the apparatus (1, 21) comprising:
a print commanding unit (2, 21) that sends a notice of printing data and printing start command to
a printing unit (22) which performs printing in accordance with printing data by page by page on sheets which are supplied one by one from a normal tray or a bypass tray,
wherein the print commanding unit (2, 21) includes
a condition determining unit (14, 15) that determines whether or not a sheet supplying condition set with respect to the printing data and a status of the printing unit (22) satisfy a condition for supplying the sheet from the bypass tray before supplying the sheet used for printing the printing data,
a checkup screen display unit (4) that displays a checkup screen relating to the sheet supply from the bypass tray in a case where it is determined by the condition determining unit (14, 15) that the condition for supplying the sheet from the bypass tray is satisfied, and
a notice permitting unit (14, 15) that permits a notice of a printing start command to the printing unit (22) in a case where a notice indicating agreement for printing is received with respect to the display of the checkup screen by the checkup screen display unit (4).

2. The printing control apparatus (1, 21) according to claim 1, wherein the condition determining unit (14, 15) determines whether or not the sheet supplying condition set with respect to the printing data and the status of the printing unit (22) satisfy the condition for supplying the sheet from the bypass tray before supplying the sheet used for printing the printing data of a first page.

3. The printing control apparatus (1, 21) according to claim 2, wherein
the condition determining unit (14, 15) determines that the sheet supplying condition and the status of the printing unit (22) satisfy the condition for supplying the sheet from the bypass tray, in a case where a sheet supplying mode which is the sheet supplying condition set with respect to the printing data of the first page is a mode for designating the bypass tray or a mode for automatically selecting the normal tray or the bypass tray, and the sheet is set on the bypass tray.

4. The printing control apparatus (1, 21) according to claim 2, wherein the condition determining unit (14, 15) determines that the sheet supplying condition and the status of the printing unit (22) satisfy the condition for supplying the sheet from the bypass tray, in a case where the sheet is set on the bypass tray and a sheet attribute which is the sheet supplying condition set with respect to the printing data of the first page is coincident only with the sheet attribute set with respect to the bypass tray.

5. A printing apparatus (1, 21) comprising:
the printing control apparatus (1, 21) according to claim 2; and
a printing unit (22) that prints the printing data page by page on the sheet supplied sheet by sheet from the normal tray or the bypass tray according to the printing data and a notice of a printing start command from the print commanding unit (2, 21).

6. The printing apparatus (1, 21) according to claim 5,
wherein the printing unit (22) includes a printing stopping unit which stops the printing of the printing data of the page, in a case where the sheet attribute set with respect to the bypass tray is not coincident with the sheet attribute which is the sheet supplying condition set with respect to the printing data of the page to be printed on the sheet supplied from the bypass tray before supplying sheet from the bypass tray,
wherein the print commanding unit (2, 21) includes
a first setting change unit (14, 15) which changes setting from the sheet attribute set with respect to the bypass tray to a sheet attribute different from the sheet attribute set with respect to the printing data of the second page and the following pages to be printed on the sheet supplied from the bypass tray in a case where it is determined by the condition determining unit (14, 15) that the sheet supplying condition set with respect to the printing data of the first page and the status of the printing unit (22) do not satisfy the condition for supplying the sheet from the bypass tray,
a sheet attribute storage unit (14, 18) which stores the sheet attribute before changing the setting by the setting change unit (14, 15),
a sheet supplying determining unit (14, 15) which determines based on the sheet attribute stored in the sheet attribute storage unit (14, 18) whether or not the sheet used for printing the printing data of the page for which the printing is stopped is to be supplied from the bypass tray in a case where the printing is stopped by the printing stopping unit, and
a second setting change unit (14, 15) which changes the setting from the sheet attribute set with respect to the bypass tray to the sheet attribute stored in the sheet attribute storage unit (14, 18), in a case where it is determined by the sheet supplying determining unit (14, 15) that the sheet used for the printing data of the page, for which printing is stopped, is to be supplied from the bypass tray, and
wherein the checkup screen display unit (4) displays the checkup screen relating to the sheet supply from the bypass tray even after the setting is changed by the second setting change unit (14, 15).

7. A carrier medium comprising a program recorded therein for causing a computer to implement functions of the units included in the printing control apparatus (1, 21) according to claim 1 on a computer.
